(19)

Europäisches
Patentamt
European
Patent Office
Office européen
des brevets

(11) **EP 1 876 150 B1**

(12) **EUROPEAN PATENT SPECIFICATION**

(45) Date of publication and mention
of the grant of the patent:
**23.03.2016 Bulletin 2016/12**

(51) Int Cl.:
**G02B 6/02** *(2006.01)*     **G02B 6/036** *(2006.01)*
**C03C 13/04** *(2006.01)*

(21) Application number: **07011759.3**

(22) Date of filing: **15.06.2007**

(54) **Radiation-resistant fluorine doped optical fiber**

Stahlungsbeständige Fluordotierte Lichtfaser

Fibre optique dopée au fluor résistant aux radiations

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **04.07.2006 FR 0606058**

(43) Date of publication of application:
**09.01.2008 Bulletin 2008/02**

(73) Proprietor: **Draka Comteq B.V.
1083 HJ Amsterdam (NL)**

(72) Inventors:
• **Regnier, Elise
91570 Bievres (FR)**
• **Kuyt, Gerard
5283 CS Boxtel (NL)**
• **Flammer, Ivo
75009 Paris (FR)**
• **Gooijer, Frans
5627 ME Eindhoven (NL)**
• **Matthijsse, Pieter
5522 AA Hapert (NL)**

(74) Representative: **Algemeen Octrooi- en
Merkenbureau B.V.
P.O. Box 645
5600 AP Eindhoven (NL)**

(56) References cited:
**US-A- 4 690 504     US-A- 4 988 162
US-A- 5 681 365**

• **SANADA K ET AL: "Radiation resistance of
fluorine-doped silica-core fibers" JOURNAL OF
NON-CRYSTALLINE SOLIDS, NORTH-HOLLAND
PHYSICS PUBLISHING. AMSTERDAM, NL, vol.
179, 1994, pages 339-344, XP004067827 ISSN:
0022-3093**
• **KAKUTA T ET AL: "Development of in-core
monitoring system using radiation resistant
optical fibers" NUCLEAR SCIENCE SYMPOSIUM
AND MEDICAL IMAGING CONFERENCE, 1994.,
1994 IEEE CONFERENCE RECORD NORFOLK,
VA, USA 30 OCT.-5 NOV. 1994, NEW YORK, NY,
USA,IEEE, US, vol. 1, 30 October 1994
(1994-10-30), pages 371-374, XP010150153 ISBN:
0-7803-2544-3**

## Description

The present invention relates to the area of optical fiber transmissions, and more specifically to a Fluorine-doped optical fiber.

Regarding optical fibers, the refractive index profile is generally qualified in relation to the plotting of a graph showing the function associating the refractive index of the fiber with the radius of the fiber. Conventionally, the distance r to the center of the fiber is shown along the abscissa axis, and the difference between the refractive index and the refractive index of the fiber cladding is shown along the ordinate axis. The index profile is therefore described as "step", "trapezoid" or "triangular" for graphs respectively showing step, trapezoid or triangular shapes. These curves are generally representative of the theoretical or set profile of the fiber, the manufacturing of the fiber possibly leading to a slightly different profile.

An optical fiber conventionally consists of an optical core whose function is to transmit and optionally amplify an optical signal, and of an optical cladding whose function is to confine the optical signal within the core. For this purpose, the refractive indexes of the core $n_c$ and of the cladding $n_g$ are such that $n_c > n_g$. As is well known, the propagation of an optical signal in a single-mode optical fiber breaks down into a fundamental mode guided in the core, and into secondary modes guided over a certain distance in the core-cladding assembly and called cladding modes.

The signal transmitted in the fiber undergoes optical losses which accumulate over the distance traveled. These transmission losses are increased in particular when the fiber is subjected to ionizing radiation such as beta, alpha, gamma and X radiation. The fiber may undergo said radiation when it is used for an optical communications system in an environment having ionizing radiation e.g. in a nuclear plant, a particle acceleration laboratory, or in a satellite sent into space. In said environment, radiation may reach dose levels of 100 Gray or more, i.e. 10 000 rad.

Conventionally, Standard Single Mode Fibers (SSMF) are used as line fibers in optical fiber transmission systems. The step index is generally obtained by doping with Phosphorus or Germanium, with which it is possible to increase the refractive index. The step index may also be obtained by doping with fluorine, with which it is possible to reduce the refractive index. These optical fibers (SSMF) have low transmission losses, generally less than 0.4 dB/km over a broad spectral range (at least 1300-1650 nm) but are sensitive to ionizing radiation. A SSMF fiber placed in an environment radiating 30 kGray will have its transmission losses increased by a few 10 to 10 000 dB/km at a wavelength of 1310 nm, this increase strongly depending on radiation conditions (dose rate in particular). A conventional SSMF fiber is therefore not suitable for use in an optical communications system installed in an environment having high doses of ionizing radiation, i.e. higher than 100 to 1000 Gray.

The article "Radiation resistance of fluorine-doped silica-core fibers", Kazuo Sanada, Naoki Shamoto, Kouichi Inada, Journal of Non-Crystalline Solids 179 (1994), 339-344, relates to the dependence on fluorine concentration of the radiation resistance, as well as the effects of high temperature hydrogen treatment on the fluorine-doped fibers before irradiation.

The article of Kakuta T. et al.: "Development of in-core monitoring system using radiation resistant optical fibers", NUCLEAR SCIENCE SYMPOSIUM AND MEDICAL IMAGING CONFERENCE, 1994, 1994 IEE CONFERENCE RECORD NORFOLK, VA, USA 30 Oct.-5 Nov. 1994, New York, NY, USA, IEEE, US, vol. 1, 30 October 1994 (1994-10-30), pages 371-374 discloses that an optical fiber of step index type having a $SiO_2$-F clad and core of 5.6 wt.% and 1.6 wt.% of fluorine, respectively shows an excellent radiation resistance.

Some known fibers are specifically designed for use in an environment where there is ionizing radiation. For example, US-A-4,690,504 discloses a single-mode optical fiber without Germanium (Ge) in the core. The absence of Ge in the core makes it possible to obtain better resistance to ionizing radiation. The optical cladding is doped with a dopant whose effect is to reduce the refractive index, such as Fluorine. This document also discloses an embodiment with a fiber whose core is slightly Fluorine-doped to offset excess oxygen in the core.

US-A-5,509,101 discloses an optical fiber resisting X- and gamma radiations in particular. This fiber has a core and a cladding doped with Fluorine. This document describes several embodiments with different concentrations of Fluorine and Germanium. It is indicated in this document that transmission losses are reduced when the fiber also comprises Germanium in the core.

WO-A-2005/109055 discloses an optical fiber with a core in pure silica and a Fluorine-doped cladding. It is indicated in this document that a high ratio - of between 9 and 10 - between the diameter of the cladding and the diameter of the core improves the resistance of the fiber to ionizing radiation.

The prior art fibers show some resistance to ionizing radiation, but nevertheless have high losses under strong radiation, in particular over and above 400 Gray. As mentioned above, standard single mode fibers are usually used as line fibers in optical fiber transmission systems, having a chromatic dispersion and a chromatic dispersion slope meeting specific telecommunications standards. For the needs of compatibility between the optical systems of different manufacturers, the International Telecommunication Union (ITU) has laid down a standard referenced ITU-T G.652 which must be met by a Standard Single Mode Fiber (SSMF). This standard is sub-divided into four sub-standards (A, B, C and D) of greater or lesser severity.

For example, the G.652B standard for transmission fibers, recommends inter alia, a range of [8.6 ; 9.5 μm] for the Mode Field Diameter (MFD) at a wavelength of 1310 nm; a maximum of 1260 nm for the cabled cut-off wavelength; a range [1300 ; 1324 nm] for the zero dispersion wavelength denoted $\lambda_0$; a maximum of 0.093 ps/nm$^2$-km for the chromatic dispersion slope value. The cabled cut-off wavelength is conventionally measured as the wavelength at which the optical signal is no longer single-mode after propagation over twenty-two meters of fiber, such as defined by sub-committee 86A of the International Electrotechnical Commission under standard IEC 60793-1-44.

There is therefore a need for a transmission fiber which shows an improved resistance to high-dose radiation.

For this purpose, the invention proposes an optical fiber whose refractive index profile is uniformly depressed with respect to the profile of a standard single mode fiber. The transmission characteristics of the optical fiber therefore substantially meet the standard G.652B and show an improved resistance to high-dose radiation (doses of more than 100 Gray).

The invention therefore concerns a single mode optical transmission fiber comprising:

- a depressed core containing at least 0.41 wt.% of Fluorine and having an absolute refractive index difference ($|\Delta n_1|$) with pure silica of more than 1.5.10$^{-3}$; and
- a depressed cladding containing at least 1.2 wt.% of Fluorine and having an absolute refractive index difference ($|\Delta n_2|$) with pure silica of more than 4.5.10$^{-3}$ and an absolute refractive index difference ($|\Delta n_2|$ - $|\Delta n_1|$) with the depressed core of more than 3.10$^{-3}$.

Preferably, the fiber has a link-Polarization Mode Dispersion value of less than or equal to 0.20 ps/sqrt(km).

Advantageously, at a wavelength of 1310 nm, the fiber shows a variation in attenuation of less than 100% for radiation ranging from 200 to 30 000 Gray at a rate of more than 1 Gray/s.

Provision can be made for the fiber to have a core which does not contain Germanium. Provision can also be made for the core not to contain Phosphorus.

It may be provided that the fiber has a ratio of Fluorine concentrations in the core and in the cladding of more than 3.

Provision can also be made for the fiber to have transmission losses of less than 5 dB/km at a wavelength of 1310 nm with no ionizing radiation. Advantageously, the transmission losses are less than 0.35 dB/km at 1310 nm with no ionizing radiation.

Preferably, the Fluorine content in the depressed core is maximally 1.4 wt%. This allows for optimal compliance with the needs for a transmission fiber having reduced transmission losses under high radiation, while still being compatible with the G652 B standard for single-mode fiber.

At least a portion of the fiber of the invention can be intended for use in an optical communications system located in an environment where there is ionizing radiation.

Advantageously, the optical system also comprises portions of standard single mode fiber (SSMF).

Other characteristics and advantages of the invention will become apparent on reading the following description of embodiments of the invention given by way of example with reference to the appended drawings which show:

- figure 1: a graph of the set profile of a fiber according to a first embodiment of the invention,
- figure 2: a graph of the set profile of a fiber according to a second embodiment of the invention,
- figure 3: a graph of transmission losses after radiation for fibers, one of the fibers conforming to one embodiment of the invention.

The inventive fiber is a single mode transmission fiber which has a depressed core and a depressed inner cladding. By depressed core is meant a central radial portion of the fiber having a refractive index that is lower than the index of an outer cladding ($n_g$), generally consisting of pure silica or fluorine-doped silica. The depressed cladding is a radial portion of the fiber whose refractive index is lower than the outer cladding index and the core index. The depressed core contains at least 0.41 wit.% and preferably at most 1.4 wt % of Fluorine and has an absolute refractive index difference with pure silica of more than 1.5.10$^{-3}$ (or 0.1 %). The depressed cladding contains at least 1.2 wt.% of Fluorine and has an absolute refractive index difference with pure silica of more than 4.5.10$^{-3}$ (or 0.3 %). The ratio of Fluorine concentrations in the core and in the claading may advantageously be higher than 3 to ensure a sufficient difference in index between the core and the optical cladding, the core possibly not being doped with Germanium or Phosphorus.

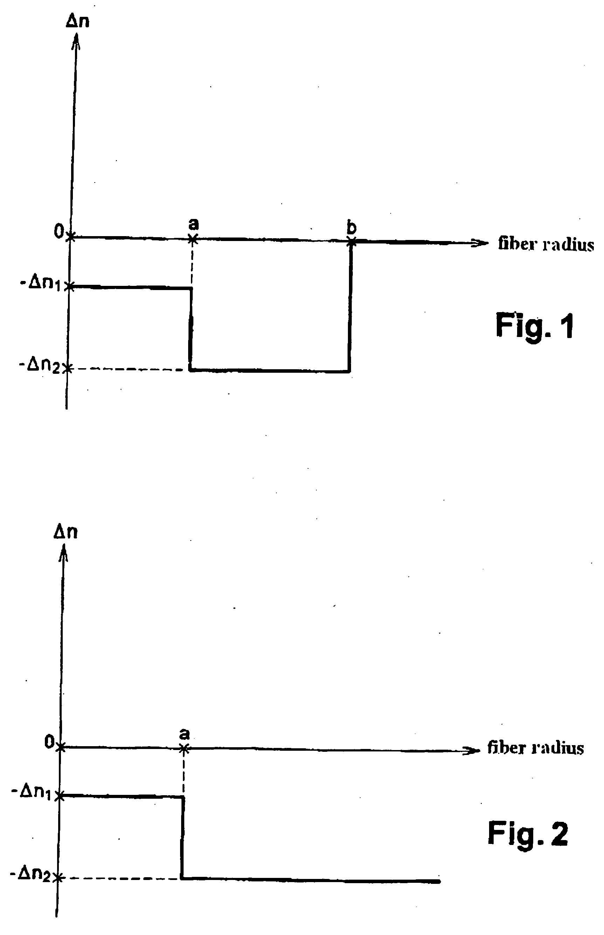

Figure 1 illustrates a first example of a refractive index profile for a transmission fiber of the invention. The illustrated profile is a set profile, i.e. representative of a theoretical profile of the fiber, the fiber actually obtained after drawing from a preform possibly having a slightly different profile.

The transmission fiber of the invention comprises a central depressed core having an absolute refractive index difference $|\Delta n_1|$ with pure silica (sometimes used on the outside of the fiber to act as an outer optical cladding), and a depressed cladding having an absolute refractive index difference $|\Delta n_2|$ with pure silica. The refractive indexes in the depressed core and the depressed cladding are longitudinally substantially constant. This imparts longitudinally uniform properties to the fiber. The central core is represented with a radius a, and the depressed cladding extends between the radial values a and b.

To define a set refractive index profile for an optical fiber, the refractive index of pure silica is generally taken as reference. The refractive index values of the central core and depressed cladding are then presented as refractive index differences $\Delta n_{1,2}$. The refractive index difference $\Delta n_1$ of the central core with silica is therefore the difference between the refractive index of silica and the refractive index of the central core ($\Delta n_1 = n_{silica} - n_{core}$). The refractive index difference $\Delta n_2$ of the depressed cladding is therefore the difference between the refractive index of silica and the refractive index of the depressed cladding ($\Delta n_2 = n_{sillica} - n_{depressed-cladding}$). An outer cladding generally exists which consists of silica, but the outer cladding may also be doped to increase or reduce its refractive index ($n_g$), e.g. to modify signal propagation characteristics.

According to the first embodiment shown figure 1, the core of the fiber contains 0.81 wt % of Fluorine but no Germanium or Phosphorus; it has a radius a of 4.35 $\mu$m and an absolute refractive index difference $|\Delta n_1|$ of $3.0.10^{-3}$ with the outer cladding in silica. The cladding contains 2.16 wt % of Fluorine and may contain neither Germanium nor Phosphorus; it has an absolute refractive index difference $|\Delta n_2|$ of $8.0.10^{-3}$ with the outer cladding in silica and a radius b such that b/a equals 8 so that the optical signal remains well confined within the core of the fiber. Doping with Fluorine is preferably uniform in the core and the cladding respectively. The outer cladding may be a sleeved tube or an overcladding in silica particles, or pure or fluorine-doped silica deposited using the Vapor phase Axial Deposit method (VAD).

Figure 2 illustrates a second example of an index profile for a transmission fiber of the invention, in which the core of the fiber contains 0.54 wt.% of Fluorine but no Germanium and no Phosphorus, and the cladding contains 1.9 wt.% of Fluorine. The core has a radius of 4.35 $\mu$m and an absolute refractive index difference $|\Delta n_1|$ of $2.0.10^{-3}$ with silica. The cladding has an absolute refractive index difference $|\Delta n_2|$ of $7.0.10^{-3}$ with silica. Fluorine doping is preferably uniform in the core, and the cladding respectively. According to this second embodiment, the fiber is fabricated from a primary preform produced by depositing inside a Fluorine-doped tube having substantially the same index as the target depressed cladding. The outer cladding may then be a sleeved tube of Fluorine-doped silica or an overcladding of Fluorine-doped silica particles. Techniques for fabricating primary preforms for fibers of the invention are described below.

The absolute refractive index difference ($|\Delta n_2| - |\Delta n_1|$) between the depressed cladding and the depressed core is $3.10^{-3}$ or more. This improves the performance of the inventive fiber, e.g. in terms of resistance to bending or cut-off wavelength.

With said fiber profiles it is possible to limit transmission losses of the fiber considerably under high radiation doses (more than 100 Gray).

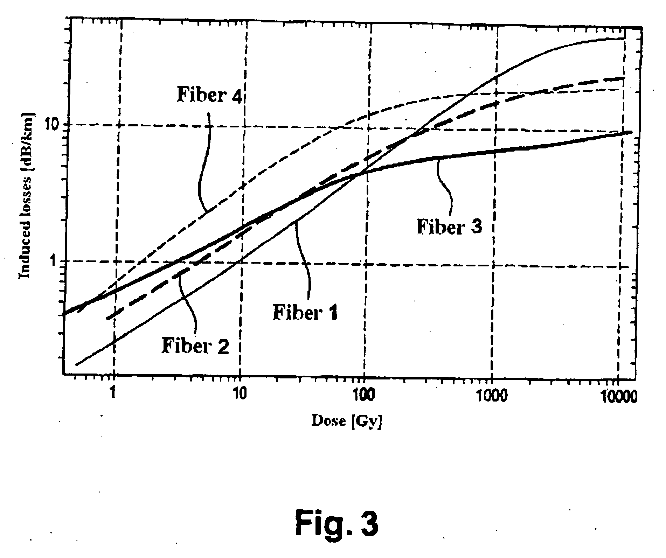

Figure 3 is a graph showing the trend in radiation-induced transmission losses, in relation to applied doses, for four fibers. One of these fibers conforms to an embodiment of the invention. Measurements were made by the Fraunhofer Institute (Appelsgarten 2 - 53879 Euskirchen - GERMANY) in September 2005 and March 2006 on behalf of CERN (1211 Geneva 23 - SWITZERLAND).

Figure 3 shows the transmission losses of four fibers: one fiber containing approximately 1 wt % Germanium in the core (Fiber 1), one fiber not according to the invention containing approximately 6 wt % Germanium in the core (Fiber 2), one fiber of the invention (Fiber 3), and one fiber not according to the invention with a pure silica core (Fiber 4). The graph shows the transmission losses of each fiber measured at a wavelength of 1310 nm under radiation of $10^4$ Gray at a rate of 0.225 Gray/s and a temperature of 28°C over a fiber length of 100 m and with an optical signal power of 10 to 40 $\mu$W.

It can be seen that the fiber of the present invention (Fiber 3) has much lower transmission losses than the fibers containing Germanium in the core (Fibers 1 and 2) and the fiber with a pure silica core (Fiber 4), in particular after doses higher than 100 Gray.

The inventive fiber therefore shows good resistance to radiation under high dose conditions (doses higher than 100 Gray) at low dose rates (typically in the order of a few 0.01 Gray/s), but also at high rates (typically higher than a few Gray/s). For example, the inventive fiber has an attenuation increment of less than 20 dB/km at 1310 nm with radiation of 10 000 Gray conducted over a one-hour period. In addition, it shows a variation in attenuation increment of less than 100% for radiation ranging from 200 to 30 000 Gray at a rate of more than 1 Gray/s.

The inventive fiber meets all the criteria of standard G.652B. It can therefore be easily used in conjunction with SSMF fibers in optical communications systems.

The radius of the depressed cladding and the depressed core is such that it complies with the criteria of standard G 652 B.

The inventive fiber can be manufactured so that transmission losses are less than 5 dB/km, even less than 0.35 dB/km at 1310 nm with no ionizing radiation.

The transmission fiber of the invention can be fabricated by drawing from a preform having an index profile such as described above.

In a known manner, an optical fiber is produced by drawing a preform on a drawing tower. A preform comprises for example a primary preform consisting of a very high quality glass tube forming part of the cladding and the core of the fiber. This primary preform can then be overcladed or sleeved to increase its diameter and form a final preform which can be used on a drawing tower. In this context, the cladding formed inside the tube is called the inner cladding, and the cladding formed outside the tube is called the outer cladding. The homothetic drawing consists of placing the preform vertically in a tower and drawing a fiber strand from one end of the preform. To do so, a high temperature is locally applied to one end of the perform until the silica softens, the drawing speed and temperature then being permanently controlled during fiber drawing since these determine the stability of the fiber properties along the preform. In particular, the diameter stability will ensure the stability of propagation properties (cut-off wavelength, mode diameters). The geometry of the preform must fully comply with the ratios of refractive indexes and diameters of the core and cladding of the fiber so that the drawn fiber has the required profile.

The component depositing in the tube is commonly called "doping", i.e. "impurities" are added to the Silica to modify its refractive index. According to the invention, Fluorine (F) is used to form the depressed core and depressed cladding of the fiber.

A preform with a high depressed cladding is difficult to produce. Fluorine does not incorporate well in silica that is heated beyond a certain temperature, whereas a high temperature is necessary for fabricating the glass. A compromise between a high temperature, needed to fabricate the glass, and a low temperature to promote good incorporation of the Fluorine does not make it possible to achieve indexes that are much lower than the Silica index.

It is proposed to fabricate the preform for the inventive fiber using Plasma Chemical Vapor Deposition (PCVD) since, with this technique, it is possible to achieve reactions at lower temperatures than with conventional techniques (CVD, VAD, OVD) through ionization of the reaction compounds. Said fabrication technique is described in documents US RE 30,635 and US 4,314,833; it allows substantial incorporation of Fluorine in the silica to form claddings with a high depressed index. The fiber of the present invention comprises a core, respectively a cladding, with high depressed indexes i.e. having an index difference with the outer cladding of more than $1.5.10^{-3}$, and $4.5.10^{-3}$ respectively.

A tube of pure or Fluorine-doped silica is provided and mounted in a glass making lathe. The tube is caused to rotate and a gaseous mixture of doped or non-doped glass precursor gasses. By application of microwave radiation a plasma is generated inside the tube. Layers of (doped) glass are hereby deposited inside the tube.

The strong reactivity of the dopants generated by microwave heating allows a high concentration of dopants to be incorporated in the silica layers. In particular for Fluorine, which cannot be incorporated properly in silica under local blowpipe heating, PCVD enables the doping of a silica layer with a high concentration of Fluorine to form the depressed cladding.

The transmission fiber of the invention can be used in an optical communications system located in an environment exposed to high ionizing radiation, e.g. an Intranet in a particle physics laboratory, a nuclear plant or a satellite exposed to cosmic radiation.

Evidently, the present invention is not limited to the embodiments described as examples. In particular, a fabrication method other than PCVD may be considered.

## Claims

1. A single mode optical transmission fiber, comprising a core-and-cladding structure, wherein each of the core portion and the cladding portion contains fluorine as dopant to decrease the refractive index, **characterized in that**:

   - said depressed core has at least 0.41 wt% of Fluorine and an absolute refractive index difference ($|\Delta n_1|$) with pure silica greater than $1.5.10^{-3}$; and
   - a depressed cladding having at least 1.2 wt% of Fluorine, an absolute refractive index difference ($|\Delta n_2|$) with pure silica greater than $4.5.10^{-3}$ and an absolute refractive index difference ($|\Delta n_2|-|\Delta n_1|$) with the depressed core greater than $3.10^{-3}$, wherein said core has at most 1.4 wt% of Fluorine.

2. The fiber according to claim 1, exhibiting at a wavelength of 1310 nm a variation in attenuation of less than 100 % for radiation ranging from 200 to 30 000 Gray at a rate of more than 1 Gray/s.

3. The fiber according to any one of the preceding claims, wherein the core comprises no Germanium.

4. The fiber according to any one of the preceding claims, wherein the core comprises no Phosphorus.

5. The fiber according to any one of the preceding claims, wherein the ratio of Fluorine concentration in the core to Fluorine concentration in the cladding is greater than 3.

6. The fiber according to any one of the preceding claims, wherein transmission losses are less than 5 dB/km at 1310 nm without any ionising radiation.

7. The fiber according to claim 6, wherein transmission losses are less than 0.35 dB/km at 1310 nm without any ionising radiation.

8. The fiber according to any one of the preceding claims, wherein the mode field diameter (MFD) at a wavelength of 1310 nm is between 8.6 $\mu$m and 9.5 $\mu$m.

9. The fiber according to any one of the preceding claims, wherein the cabled cut-off wavelength is maximally 1260 nm.

10. The fiber according to any one of the preceding claims, wherein the link-Polarization Mode Dispersion is less than or equal to 0.2 ps/sqrt (km).

**11.** A use of at least a portion of a fiber according to any one of the preceding claims in a communication optical system located in an environment exhibiting ionising radiations.

**12.** The use according to claim 11, wherein the optical system further comprises portions of a standard single-mode fiber (SSMF).

**Patentansprüche**

**1.** Monomodelichtleiterfaser, mit einer Kern-und-Mantel-Struktur, wobei sowohl der Kernabschnitt als auch der Mantelabschnitt Fluor als Dotierstoff aufweist, um den Brechungsindex zu reduzieren, **dadurch gekennzeichnet, dass**:

- der abgesenkte Kern wenigstens 0,41 Gew.-% Fluor und eine absolute Brechungsindexdifferenz ($|\Delta n_1|$) mit reinem Siliciumdioxid von größer als $1{,}5\ 10^{-3}$ aufweist; und
- ein abgesenkter Mantel wenigstens 1,2 Gew.-% Fluor, eine absolute Brechungsindexdifferenz ($|\Delta n_2|$) mit reinem Siliciumdioxid von größer als $4{,}5\ 10^{-3}$ und eine absolute Brechungsindexdifferenz ($|\Delta n_2|$-$|\Delta n_1|$) mit dem erniedrigten Kern von größer als $3 \cdot 10^{-3}$ aufweist, wobei der Kern höchstens 1,4 Gew.-% Fluor aufweist.

**2.** Monomodelichtleiterfaser nach Anspruch 1, wobei diese bei einer Wellenlänge von 1310 nm eine Dämpfungsvariation von weniger als 100 % für Strahlung in einem Bereich von 200 bis 30 000 Gray bei einer Dosis von mehr als 1 Gray/s aufweist.

**3.** Monomodelichtleiterfaser nach einem der vorhergehenden Ansprüche, wobei der Kern kein Germanium umfasst.

**4.** Monomodelichtleiterfaser nach einem der vorhergehenden Ansprüche, wobei der Kern kein Phosphor umfasst.

**5.** Monomodelichtleiterfaser nach einem der vorhergehenden Ansprüche, wobei das Verhältnis der Fluorkonzentration im Kern zur Fluorkonzentration im Mantel größer als 3 ist.

**6.** Monomodelichtleiterfaser nach einem der vorhergehenden Ansprüche, wobei ohne ionisierende Strahlung die Übertragungsverluste weniger als 5 dB/km bei 1310 nm betragen.

**7.** Monomodelichtleiterfaser nach Anspruch 6, wobei ohne ionisierende Strahlung die Übertragungsverluste weniger als 0,35 dB/km bei 1310 nm betragen.

**8.** Monomodelichtleiterfaser nach einem der vorhergehenden Ansprüche, wobei der Modenfelddurchmesser (MFD) bei einer Wellenlänge von 1310 nm zwischen 8,6 $\mu$m und 9,5 $\mu$m beträgt.

**9.** Monomodelichtleiterfaser nach einem der vorhergehenden Ansprüche, wobei die verkabelte Cut-off-Wellenlänge maximal 1260 nm beträgt.

**10.** Monomodelichtleiterfaser nach einem der vorhergehenden Ansprüche, wobei die Verbindungs-Polarisationsmodendispersion gleich oder weniger als 0,2 $ps/\sqrt{km}$ beträgt.

**11.** Verwendung wenigstens eines Teils einer Monomodelichtleiterfaser nach einem der vorhergehenden Ansprüche in einem optischen Kommunikationssystem, das sich in einer Umgebung mit ionisierender Strahlung befindet.

**12.** Verwendung nach Anspruch 11, wobei das optische Kommunikationssystem ferner Teile einer Standard-Singlemodefaser (SSMF) umfasst.

**Revendications**

**1.** Fibre optique de transmission monomode, comprenant une structure de coeur et de gaine, dans laquelle chacune de la portion de coeur et de la portion de gaine contient du fluor en tant que dopant pour réduire l'indice de réfraction, **caractérisée en ce que** :

- ledit coeur enterré présente au moins 0,41 % en poids de fluor et une différence d'indice de réfraction absolue ($|\Delta n_1|$) avec la silice pure supérieure à $1{,}5{.}10^{-3}$ ; et
- ladite gaine enterrée présente au moins 1,2 % en poids de fluor, une différence d'indice de réfraction absolue ($|\Delta n_2|$) avec la silice pure supérieure à $4{,}5{.}10^{-3}$ et une différence d'indice de réfraction absolue ($|\Delta n_2|$-$|\Delta n_1|$) avec le coeur enterré supérieure à $3{.}10^{-3}$, dans laquelle ledit coeur présente au plus 1,4 % en poids de fluor.

**2.** Fibre selon la revendication 1, présentant, à une longueur d'onde de 1310 nm, une variation d'atténuation inférieure à 100 % pour une irradiation allant de 200 à 30 000 Gray avec un débit supérieur à 1 Gray/s.

**3.** Fibre selon l'une quelconque des revendications précédentes, dans laquelle le coeur ne comprend pas de germanium.

**4.** Fibre selon l'une quelconque des revendications précédentes, dans laquelle le coeur ne comprend pas de phosphore.

**5.** Fibre selon l'une quelconque des revendications précédentes, dans laquelle le rapport des concentrations en fluor dans le coeur et dans la gaine est supérieur à 3.

**6.** Fibre selon l'une quelconque des revendications précédentes, dans laquelle les pertes en transmission sont inférieures à 5 dB/km à 1310 nm sans irradiation ionisante.

**7.** Fibre selon la revendication 6, dans laquelle les pertes en transmission sont inférieures à 0,35 dB/km à 1310 nm sans irradiation ionisante.

**8.** Fibre selon l'une quelconque des revendications précédentes, dans laquelle le diamètre de champ modal, MFD, à une longueur d'onde de 1310 nm est entre 8,6 $\mu$m et 9,5 $\mu$m.

**9.** Fibre selon l'une quelconque des revendications précédentes, dans laquelle la longueur d'onde de coupure câblée est de 1260 nm au maximum.

**10.** Fibre selon l'une quelconque des revendications précédentes, dans laquelle la dispersion de mode de polarisation de liaison est inférieure ou égale à 0,2 ps/sqrt (km).

**11.** Utilisation d'au moins une portion d'une fibre selon l'une quelconque des revendications précédentes dans un système optique de communication située dans un environnement présentant des radiations ionisantes.

**12.** Utilisation selon la revendication 11, dans laquelle le système optique comprend en outre des portions de fibre monomode standard (SSMF).

**Fig. 1**

**Fig. 2**

**Fig. 3**

## REFERENCES CITED IN THE DESCRIPTION

**Patent documents cited in the description**

- US 4690504 A
- US 5509101 A
- WO 2005109055 A

- US RE30635 E
- US 4314833 A

**Non-patent literature cited in the description**

- **KAZUO SANADA ; NAOKI SHAMOTO ; KOUICHI INADA.** Radiation resistance of fluorine-doped silica-core fibers. *Journal of Non-Crystalline Solids,* 1994, vol. 179, 339-344

- Development of in-core monitoring system using radiation resistant optical fibers. **KAKUTA T. et al.** NUCLEAR SCIENCE SYMPOSIUM AND MEDICAL IMAGING CONFERENCE, 1994, 1994 IEE CONFERENCE RECORD NORFOLK, VA, USA 30 Oct.-5 Nov. 1994. IEEE, 30 October 1994, vol. 1, 371-374